# EUROPEAN PATENT APPLICATION

(11) **EP 2 803 439 A1**
(43) Date of publication of application: **19.11.2014**
(21) Application number: 13167888.0
(22) Date of filing: 15.05.2013
(51) Int. Cl.: B23K 11/20, B23K 11/26, B23K 20/06, B23K 20/227, F16C 33/64, F16C 35/04

(54) **Method for manufacturing a rolling bearing and rolling bearing manufactured according to such a method**

(71) Applicant: Aktiebolaget SKF, 41 550 Göteborg (SE)
(72) Inventor: Ribault, Patrice, 37210 Vouvray (FR)
(74) Representative: Myon, Gérard Jean-Pierre

(57) **Abstract**

This method is for manufacturing a rolling bearing (2) comprising a rotatable ring (4), a non-rotatable ring (6), rolling bodies (8) and a flange (12) coupled with a first ring (6) amongst the rotatable ring and non rotatable ring. This method includes at least the following steps: forming the rings (4, 6) and the flange (12) as three independent parts, immobilizing a weldable insert (14) onto the first ring (6; 4), by electro magnetic pulse technology (EMPT) or by capacitor discharge welding (CW), and welding together the insert (14) and the flange (12) or the insert and a flange holding member (20).

The rolling bearing includes the insert (14) immobilized on the first ring (6), by electromagnetic pulse technology (EMPT) or by capacitor discharge welding (CDW). Moreover, the flange (14) or a flange holding member (20) is welded on the insert.

## Description

### TECHNICAL FIELD OF THE INVENTION

The present invention relates to a method for manufacturing a rolling bearing and to a rolling bearing which can be manufactured according to this method.

### BACKGROUND ART OF THE INVENTION

In the field of rolling bearings, it is known to use high carbon steel, in particular 100Cr6 steel, in order to form the inner and outer rings of a rolling bearing. These rings define raceways which come into contact with the rolling bodies of the rolling bearing, such as balls, needles or rollers and such a type of steel can be hardened at the level of these raceways. Such a type of steel is not weldable.

On the other hand, some rolling bearings must be equipped with a flange in order to immobilize them with respect to their environment, e. g. with respect to a supporting bracket. In this case, the use of high carbon steel prevents a direct welding of the flange onto a ring of the bearing.

Moreover, some rolling bearings include several rows of balls and it is known to divide one ring of a bearing into a main portion and a flange which is slidably mounted onto the main portion, which allows to immobilize axially the balls with a wished clearance or pre-load. When the main portion and the flange are made of high carbon steel because each of them defines a raceway for the balls, it is not possible to weld them directly together.

A first solution to this problem is to manufacture a single piece in order to form the ring of the bearing and the associated flange or the main portion of the ring and the associated flange. This induces an increased cost, since the flange must be made in a high carbon steel which is costly. Moreover, in case a bearing includes two rows of balls, the axial clearance or pre-load cannot be precisely controlled.

Another solution consists in using a case hardening steel for the non rotatable ring or the main portion and in carburizing it in such a way that an area of this ring, which is to be further welded with the flange or another part of a ring, gets no carbon enrichment. This can be obtained by machining the carburized material after case hardening or by protecting the area that should not receive carbon during hardening. This approach is rather complicated and increases the overall cost of the bearing.

According to the approach of EP-B-1 644 650, one uses an intermediate insert between a bearing ring and a flange, the insert being brazed or soldered onto the bearing ring and the flange being welded onto the insert. This approach induces that some material must be brought into the connection zone between these two parts, which is rather complicated and also costly. Moreover, this approach induces that a large quantity of heat must be provided in the brazed or soldered connection since a substantial portion of the parts to be joined must be heated, in addition to the solder material. This can lead to some modifications of the structure of these parts, in particular by tempering.

On the other hand, DE-A-10 2008 012 761 discloses a portion of a bearing which comprises two elements connected together via shock welding. This approach is limited to electrically conductive materials. Moreover shock welding requires a very high electric intensity so that to generate a very severe impact between parts, which induces costly equipments and technical difficulties to handle such high energy densities (coil lifetime, switch technology, security...). This problem becomes even trickier when the parts diameters increase.

Other techniques can be used in order to couple a ring with a flange, these techniques being based on the use of glue, screws, snap rings, etc... These techniques are limited to the cases where efforts are not high or the manufacturing costs are not a key issue.

### SUMMARY OF THE INVENTION

One object of the present invention is to solve the above described problems and limitations by providing a method for manufacturing a rolling bearing which is economical and compatible with the use of high carbon steel.

To this end, the invention relates to a method for manufacturing a rolling bearing, this bearing comprising a rotatable ring, a non rotatable ring, rolling bodies and a flange coupled with a first ring, amongst the rotatable ring and the non rotatable ring. According to the invention, this method includes at least the following steps:
a) forming the rings and the flange as three independent parts,
b) immobilizing a weldable insert onto the first ring, by electro magnetic pulse technology (EMPT) or by capacitor discharge welding (CDW),
c) welding together the insert and the flange or the insert and a flange holding member.

Thanks to the invention, once it has been immobilized on the first ring by EMPT or CDW technology, the weldable insert constitutes an anchoring means which can be used to couple the flange with the first ring, by welding the flange or a flange holding member onto the insert. This can easily be made since the insert is compatible with a welding operation because it does not need to be made in a high carbon steel, such as 100Cr6, as the insert does not form a raceway for the rolling bodies. Basically, EMPT and CDW technologies are assembly techniques which do not generate heat affected zones (HAZ) in the two parts to be joined. Thus, the method of the invention does not imply that any portion of the ring or an associated part, such as the flange, is overheated.

In the meaning of the invention, a heat affected zone or HAZ is a zone of a part submitted to a sufficiently high temperature to modify the material microstructure and affect its mechanical properties. High carbon steels are said to be non-weldable because the welded seam area and the HAZ beside the seam undergo an uncontrolled martensitic heat treatment resulting in cracks. Using welding techniques that do not generate any HAZ overpass this problem since no material microstructure change occurs in any of the welded parts, then no risk for cracks.

According to further aspects of the invention which are advantageous but not compulsory, this method might incorporate one or several of the following features:
- during step a), the weldable insert and the first ring are immobilized together by magnetic pulse welding (MPW),
- during step b), the weldable insert and the first ring are immobilized together by magnetic pulse forming (MPF),
- during step c), a laser welding technique is used,
- during step c), the insert and the flange are welded directly together. Alternatively, during step c), the insert and the flange holding member are welded directly together in a position where the holding member blocks the flange onto the first ring.

The invention also concerns a rolling bearing which can be manufactured by the method described here-above and, more precisely, a rolling bearing comprising a rotatable ring, a non rotatable ring, rolling bodies located in a rolling chamber between raceways defined by the rotatable and non rotatable rings, and a flange coupled with a first ring, amongst the rotatable and non rotatable rings. According to the invention, this rolling bearing includes an insert immobilized on the first ring by electromagnetic pulse technology (EMPT) or by capacitor discharge welding (CDW) and the flange or a flange holding member is welded on this insert.

According to further aspects of the invention which are advantageous but non compulsory, such a rolling bearing can incorporate one or several of the following features:
- The rings are made of a high carbon steel, in particular of 100Cr6 steel, and the insert is made of low carbon steel, aluminium or an aluminium alloy.
- The first ring has two radial envelope surfaces and two axial envelope surfaces and the insert does not protrude externally from these surfaces, with respect to the first ring.
- The first ring has a recess to accommodate the insert, internally with respect to the envelope surfaces.
- The flange is mechanically blocked on the second ring by the flange holding member, which is directly welded on the insert.
- The bearing has two rows of rolling bodies and the flange defines a raceway for one row of rolling bodies.
- The bearing has one row of balls and is of the 4-points-of-contact type.
- The first ring has at least one local recess which accommodates a portion of the insert which is radially retracted or expanded by magnetic pulse forming, so that the insert is mechanically blocked on the first ring.
- The insert is a sleeve mounted radially around or within the first ring.
- The insert is made of a portion of a rolled and welded low carbon steel tube.

### BRIEF DESCRIPTION OF THE DRAWINGS

The present invention and its advantages will be well understood on the basis of the following description, which is given as an illustrative example, without restricting the scope of the invention and in relation with the annexed drawings, among which:
- figure 1 is a sectional view of a rolling bearing according to a first embodiment of the invention,
- figure 2 is a half sectional view, corresponding to the upper portion of figure 1, of a rolling bearing according to a second embodiment of the invention;
- figure 3 is a half sectional view similar to figure 2, for a rolling bearing corresponding to a third embodiment of the invention;
- figure 4 is a half sectional view similar to figure 2, for a rolling bearing corresponding to a fourth embodiment of the invention;
- figure 5 is a half sectional view similar to figure 2 for a rolling bearing corresponding to a fifth embodiment of the invention; and
- figure 6 is a sectional view along line VI-VI on figure 5.

### DETAILED DESCRIPTION OF SOME EMBODIMENTS

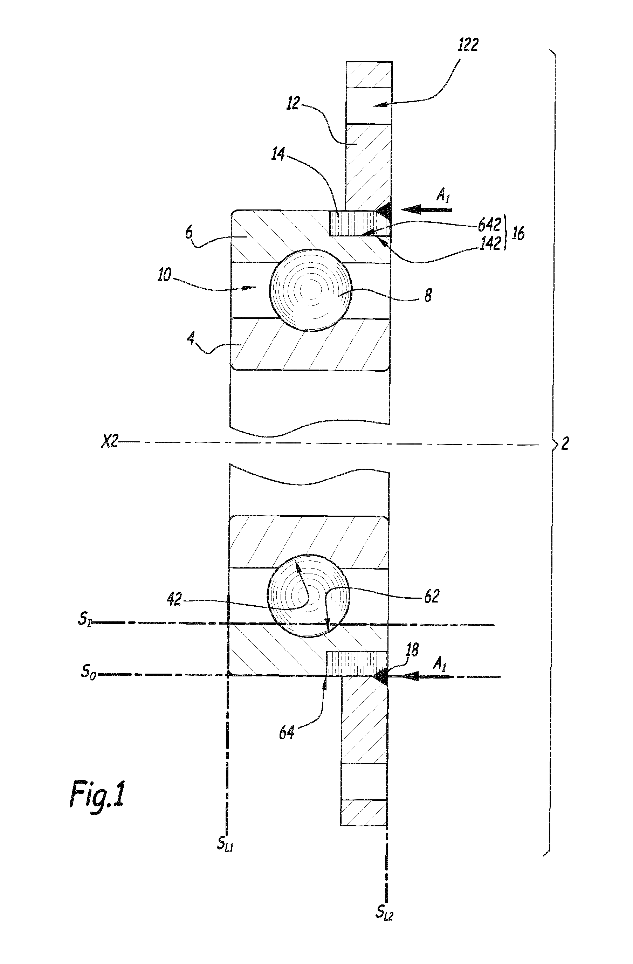

Figure 1 discloses a rolling bearing 2 with an inner rotatable ring 4 and an outer non rotatable ring 6. X2 denotes the central axis of bearing 2, which forms a rotation axis for ring 4. A series of balls 8 is located in a rotation chamber 10 defined between rings 4 and 6. Inner ring 4 defines an inner raceway 42 and outer ring 6 defines an outer raceway 62. These raceways are used to guide balls 8 within rotation chamber 10.

Rings 4 and 6 are made of high carbon steel, that is of a steel which includes a relatively high percentage of carbon, in the range 0,5-1,1% by weight. Such a high carbon steel can successfully undergo a heat treatment which is necessary to harden raceways 42 and 62. For example, the material of rings 4 and 6 can be 100Cr6 steel. Other materials can be used to constitute rings 4 and 6, namely C45, C55, C67, C80,...

Rolling bearing 2 also includes a flange 12 which is provided with several through holes regularly distributed around a central axis X2 of rolling bearing 2. One of these through holes is visible on figure 1 with reference 122.

When rolling bearing 2 is in use, inner ring 4 rotates around axis X2, whereas outer ring 6 is kept fast in non-rotation thanks to the cooperation of flange 12 with a non represented support structure.

Rolling bearing 2 also includes an insert 14 which is made of low carbon steel. A low carbon steel, sometimes called plane-carbon steel, is the most common form of steel and contains generally less than 0,3% carbon by weight. This type of steel has a relatively low price and provides material properties that are acceptable for most applications, including the ones in the field of rolling bearings, apart from the hardened surfaces which constitute the raceways 42 and 62.

Insert 14 is immobilized within a correspondingly shaped recess 64 provided on the radial outer surface of outer ring 6.

Actually, outer ring 6 is defined between a cylindrical inner radial envelope surface S_{I} and a cylindrical outer radial envelope surface So. Surfaces S_{I} and So each have a circular cross section and are centered on axis X2. Outer ring 6 is also defined between a first lateral envelope surface S_{L1} and a second lateral envelope surface S_{L2} which are perpendicular to axis X₂ and parallel to each other. Surfaces S_{I}, S_{O}, S_{L1} and S_{L2} together define a volume within which outer ring 6 is located, together with insert 14. In other words, once it is mounted into recess 64, insert 14 does not protrude outwardly of envelope surfaces S_{I}, S_{O}, S_{L1} and S_{L2} with respect to outer ring 6. Thus, once it is mounted and immobilized onto ring 6, insert 14 does not basically change the way outer ring 6 is manipulated on an assembly chain or the way rolling bearing 2 as a whole is manipulated.

During manufacturing of rolling bearing 2, rings 4 and 6, flange 12 and insert 14 are, at first, machined as four independent parts. In particular, insert 14 can be made of a slice of a commercially available steel tube with a circular cross-section. This tube is advantageously made by rolling and welding a sheet of low carbon steel, which is particularly economical.

Insert 14 is immobilized onto outer ring 6 by electro magnetic pulse technology or EMPT. More precisely, one uses magnetic pulse welding or MPW, which is based on EMPT, in order to firmly immobilize insert 14 within recess 64. MPW is a known technique for assembling two parts together, as explained in WO-A-01/19549.

16 designates a cylindrical interface zone between a radial inner surface 142 of insert 14 and the bottom 642 of recess 64. At the level of interface zone 16, insert 14 is firmly fixed on outer ring 6, via an interaction at the atomic level, because of the extremely energetic collision between these two parts.

Later, it is possible to weld flange 12 around insert 14, via laser welding as shown by arrow A₁ on figure 1. Laser welding results in the creation of a weld 18 at the interface between parts 12 and 14.

An important feature of the invention is that the connection between parts 6 and 14, at the level of interface zone 16, and the connection between parts 12 and 14, at the level of weld 18 occurs without adding an external material (or filler material), which is economical and avoids feeding an additional material up to these zones during manufacturing. As flange 12 is made of a low carbon steel, it can easily be laser welded with insert 14, which is also made of a low carbon steel.

Alternatively, flange 12 and/or insert 14 can be made of aluminium or an aluminium based alloy.

According to another embodiment of the invention, capacitor discharge welding or CDW can be used to fix parts 12 and 14 together. This welding technique is known, for instance, from GB-A-2 464 514

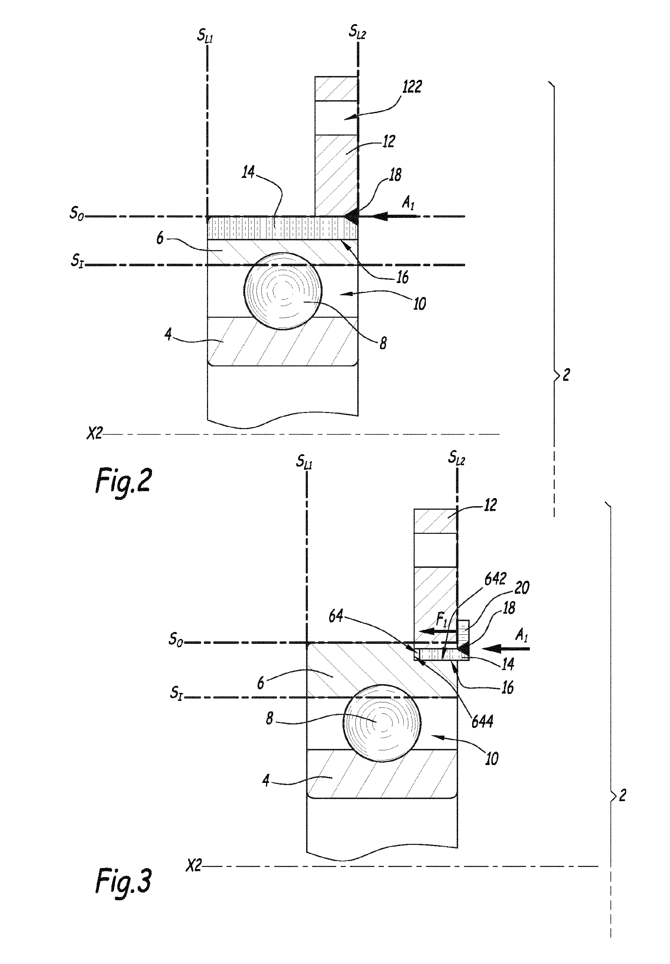

In the second to fifth embodiments of the invention represented on figures 2 to 6, the same parts as in the first embodiment have the same references, are built in the same way and work in the same way. One describes here-after mainly the differences between these embodiments and the first embodiment.

In the embodiment of figure 2, the insert 14 extends on the whole axial length of the outer ring 6, that is from envelope surface S_{L1} to envelope surface S_{L2}. Thus, the interface zone 16 between parts 6 and 14 extends along the whole axial length of outer ring 6, which improves fixing of insert 14 onto outer ring 6 with respect to the first embodiment. As in the first embodiment, immobilization of insert 14 around outer ring 6 can be obtained by MPW or CDW technique.

Coupling between insert 14 and flange 12, which are both made of low carbon steel, can be obtained by laser welding, as shown by arrow A₁.

In this embodiment, the radial thickness of outer ring 6 is reduced with respect to a standard bearing where this ring extends radially between an inner radial envelope surface S_{I} and an outer radial envelope surface S_{O}. Actually, the radial thickness of outer ring 6 is reduced by a value which equals the radial thickness of insert 14, so that mounting of insert 14 around outer ring 6 does not substantially increase the radial size of the composite ring made of parts 6 and 14. In other words, insert 14 does not protrude outwardly of surfaces So, S_{I}, S_{L1} and S_{L2} with respect to outer ring 6. Thus, ring 6 and rolling bearing 2 can be manipulated in the same way as a standard bearing.

In the embodiment of figure 3, insert 14 is immobilized within recess 64 of outer ring 6 by MPW or CDW technique, along a cylindrical interface zone 16 which has the same geometry as in the first embodiment. This insert 14 protrudes across lateral surface envelope S_{L2}, outwardly with respect to outer ring 6. Thus, a holding member 20 can be welded by laser welding on insert 14, as shown by arrow A₁. This holding member 20 exerts on flange 12 a compression force F₁ which pushes flange 12 against a lateral wall 644 of recess 64 and blocks it within recess 64 by pinching effect. Thus, flange 12 can be made of any material chosen for its mechanical properties, since it does not have to be welded with outer ring 6 or insert 14.

Flange 12 can be made of a weldable or non weldable metal or of a synthetic material, in particular a composite material. Actually, holding member 20 forms an extension of insert 14 which is used to mechanically hold flange 12 within recess 64 of outer ring 6.

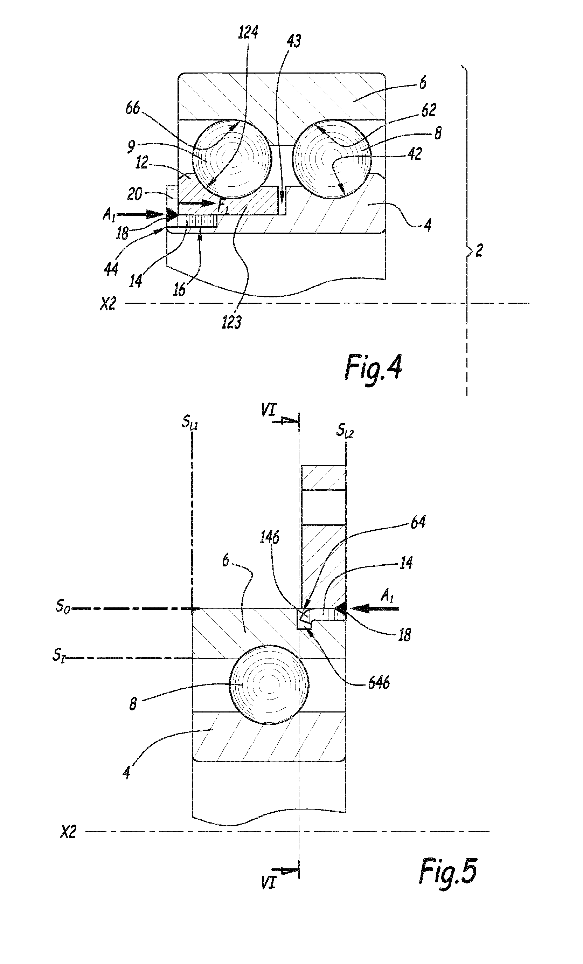

In the embodiment of figure 4, rolling bearing 2 includes two rows of balls 8 and 9 and an inner ring 4 defines a raceway 42 for the first row of balls 8, whereas outer ring 6 defines two raceways 62 and 66 for the two rows of bowls 8 and 9.

A flange 12 is mounted onto ring 4, via a slide movement parallel to axis X2, and defines a raceway 124 for the second row of balls 9.

Parts 4, 6 and 12 are all made of high carbon steel, which is important since they define raceways 42, 62, 66 and 124. These parts are formed independently from one another in a first step of the manufacturing method of rolling bearing 2.

Flange 12 must be fixed onto ring 4 in order to hold the second row of balls in position and the axial distance between raceways 124 and 42 must be precisely controlled in order to define an axial clearance or an axial preload of the bearing.

Since ring 4 and flange 12 cannot be welded directly together, an insert 14 is welded onto ring 4 by MPW technique, at the level of a cylindrical interface zone 16.

Moreover, a holding member 20 is welded onto insert 14 by laser welding, as shown by arrow A₁. The position of holding member 20 with respect to insert 14 is chosen so that this holding member forms a stop for flange 12 which can slide parallel to axis X2 with respect to ring 4. In other words, the axial position of flange 12 along axis X2 with respect to ring 4 is limited by holding member 20 on the left of figure 4 and by balls 9 on the right. On figure 4, arrow F₁ represents a blocking force exerted by holding member 20 on flange 12.

Actually, ring 4 defines a first recess 43 for accommodating a heal 123 of flange 12 and a second recess 44 for accommodating insert 14, as recess 64 for the first embodiment.

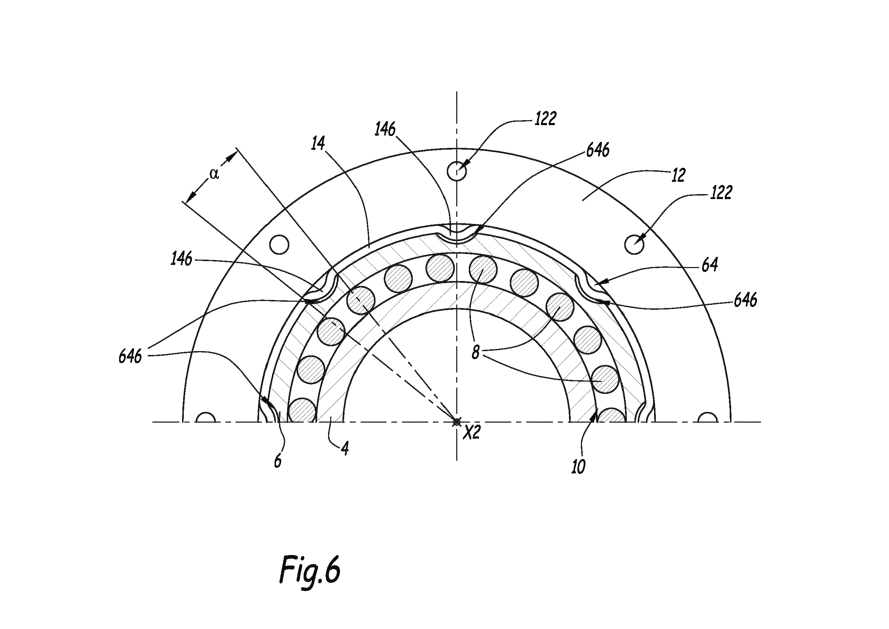

Here again, immobilization of insert 14 onto main portion 41 can also be obtained by CDW technique. In the fifth embodiment of the invention represented on figures 5 and 6, an insert 14 is introduced with in a recess 64 of the outer ring 6 of the rolling bearing 2 and this insert is fixed onto outer ring 6 by local deformation which is obtained by magnetic pulse forming or MPF, which is another variant of EMPT. More precisely, insert 14 is built as a cylindrical sleeve with radial dimensions compatible with its introduction within recess 64, in such a configuration that it does not extend outwardly across envelope surfaces So, S_{I}, S_{L1} and S_{L2} defined as in the first embodiment. Recess 64 is provided with eight nicks 646 regularly distributed around axis X2 and which extend radially towards axis X2 on a limited angular sector whose angle α is less than 30°. Thus, insert 14 can be locally shaped by MPW technique in order to constitute local bumps 146 oriented towards axis X2, each bump 146 being engaged within a nick 646. This immobilizes insert 14 with respect to outer ring 6 both radially and axially, with the same result as the MPW or CDW welding technique considered for the first four embodiments.

Once insert 14 has been immobilized on outer ring 6 via this MPF technique, it is possible to use a laser welding technique represented by arrow A₁ on figure 5 to weld flange 12, which is made of low carbon steel, onto insert 14 which is also made of low carbon steel.

In the second to fifth embodiments, insert 14 can be made of aluminium or an aluminium based alloy.

In all embodiments, instead of balls, some other rolling bodies can be used, e.g. needles or rollers.

The invention has been represented in the first to third and fifth embodiments in case the flange 12 is mounted onto the outer ring 6 of the rolling bearing 2 which is non rotatable. Alternatively, if the inner ring 4 is non rotatable, it is possible to use the invention in order to mount a flange onto this inner ring. Similarly, the embodiment of figure 4 can be used with a two-part outer ring associated to a slidable flange.

Instead of laser welding, other welding techniques can be used to couple insert 14 to flange 12 or holding member 20.

Irrespective of the embodiment and according to a non represented aspect, the invention can be implemented with an instrumented bearing which includes an encoder washer coupled to the rotating ring and associated rotation sensing means.

As shown for all embodiments represented on the figures, insert 14 is advantageously a sleeve which is mounted radially around ring 6 or ring 4. It can also be mounted radially within the ring.

When insert 14 is mounted radially within the ring and when one uses MPF for shaping it, then bumps 146 are radially expanded to penetrate into local nicks provided radially on the outside of recess 64.

The sleeve shape of insert 14 is easy to obtain, e.g. by slicing a tube with a cross section corresponding to the geometry of the ring, in particular to the geometry of recess 64 or 44. Other techniques are available.

In the embodiments of figures 1 to 3 and 5, the bearing 2 has one row of balls and is of the 4-points-of-contact type.

In the embodiments described here-above, insert 14 is immobilized onto ring 6 or 4 before it is coupled to flange 12 or holding member 20. According to a variant applicable to all embodiments, parts 12 and 14 or 14 and 20 can be welded together before insert 14 is immobilized onto the ring by EMPT or CDW, even though in such a case the plastic shrinking onto the ring may be more difficult to obtain due to the rigidity of the insert and flange.

The EMPT used as a forming technique (MPF = Magnetic Pulse Forming) is less problematic than MPW because the required magnetic energy is smaller: one part must be formed onto the other, but the impact speed between both parts does not matter.

The embodiments and variants considered here-above can be combined in order to define new embodiments.

## Claims

1. A method for manufacturing a rolling bearing (2), said bearing comprising
- a rotatable ring (4),
- a non-rotatable ring (6),
- rolling bodies (8, 9) and
- a flange (12) coupled with a first ring (6; 4), amongst the rotatable ring and non rotatable ring,
wherein said method includes at least the following steps
a) forming the rings (4, 6) and the flange (12) as three independent parts,
b) immobilizing a weldable insert (14) onto the first ring (6 ; 4) , by electro magnetic pulse technology (EMPT) or by capacitor discharge welding (CW),
c) welding together the insert (14) and the flange (12) or the insert and a flange holding member (20).

2. Method according to claim 1, wherein, during step b), the weldable insert (14) and the first ring (6; 4) are immobilized together by magnetic pulse welding (MPW).

3. Method according to claim 1, wherein, during step b), the weldable insert (14) and the first ring (6; 4) are immobilized together by magnetic pulse forming (MPF).

4. Method according to any preceding claim, wherein, during step c), a laser welding technique (A₁) is used.

5. Method according to any preceding claim, wherein, during step c), the insert (16) and the flange (12) are welded directly together.

6. Method according to any of claims 1 to 4, wherein, during step c), the insert (14) and the flange holding member (20) are welded directly together in a position where the holding member blocks (F₁) the flange (12) onto the first ring (6; 4).

7. A rolling bearing (2), comprising
- a rotatable ring (4),
- a non-rotatable ring 6),
- rolling bodies (8, 9) located in a rolling chamber (10) between raceways (42, 62; 42, 62, 66) defined by the rings, and
- a flange (12) coupled with a first ring (6; 4), amongst the rotatable ring (4) and non rotatable ring (6),
wherein this rolling bearing includes an insert (14) immobilized on the first ring (6; 4) by electromagnetic pulse technology (EMPT) or by capacitor discharge welding (CDW), and wherein the flange (14) or a flange holding member (20) is welded on the insert.

8. Bearing according to claim 7, wherein the rings (4, 6) are made of a high carbon steel, in particular of 100Cr6 steel, and the insert (14) is made of low carbon steel, aluminium or an aluminium alloy.

9. Bearing according to one of claims 7 and 8, wherein the first ring (6; 4) has two radial envelope surfaces (So, S_{I}) and two axial envelope surfaces (S_{L1}, S_{L2}) and the insert (14) does not protrude externally from these surfaces with respect to the first ring.

10. Bearing according to claim 9, wherein the first ring (6; 4) has a recess (64; 44) to accommodate the insert (14), internally with respect to the envelope surfaces (S_{O}, S_{I}, S_{L1}, S_{L2}).

11. Bearing according to one of claims 7 to 10, wherein the flange (12) is mechanically blocked (F₁) on the second ring by the flange holding member (20), which is directly welded on the insert (14).

12. Bearing according to one of claims 7 to 11, wherein the bearing (2) has two rows of rolling bodies (8, 9) and the flange (12) defines a raceway (124) for one row of rolling bodies.

13. Bearing according to one of claims 7 to 11, wherein the bearing (2) has one row of balls (8) and is of the 4-points-of-contact type.

14. Bearing according to one of claims 7 to 13, wherein the first ring (6) has at least one local recess (646) which accommodates a portion (146) of the insert (14) which is radially retracted or expanded by magnetic pulse forming (MPF), so that the insert is mechanically blocked on the first ring.

15. Bearing according to one of claims 7 to 14, wherein the insert (14) is a sleeve mounted radially around or within the first ring (6; 4).

16. Bearing according to one of claims 7 to 15, wherein the insert (14) is made of a portion of a rolled and welded low carbon steel tube.
